# EUROPÄISCHE PATENTANMELDUNG

(11) **EP 1 460 309 A2**
(43) Veröffentlichungstag der Anmeldung: **22.09.2004**
(21) Anmeldenummer: 03028787.4
(22) Anmeldetag: 13.12.2003
(51) Int. Cl.: F16H 9/10, F16H 55/54

(54) **Stufenlos einstellbares Getriebe**

(30) Priorität: 15.03.2003 DE 10311432
(71) Anmelder: Schöller, Hans, 97215 Uffenheim (DE)
(72) Erfinder: Schöller, Hans, 97215 Uffenheim (DE)
(74) Vertreter: Pöhner, Wilfried Anton, Dr.

(57) **Zusammenfassung**

Stufenlos einstellbares Getriebe mit Antriebs- und Abtriebswelle, sowie einer oder mehreren zugmittelaufnehmenden Scheiben (Getriebescheiben), die im Durchmesser stufenlos veränderbar sind, wobei die Getriebescheiben (1) segmentartig aufgebaut sind und eine mittige Bohrung (2) aufweisen, an die ein in axialer Richtung beweglich gelagertes Steuerelement (7) mit konischer Außenform anliegt, die Segmente (3) in radialer Richtung stufenlos beweglich sind. Der übersetzungswirksame Durchmesser jeder Getriebescheibe (1) ist durch die Verschiebung des Steuerelementes (7) in axialer Richtung unter Aufweitung der mittigen Bohrung (2) zwischen den Segmenten (3) regulierbar, wobei die Segmente (3) in axialer Richtung beidseitig geführt und angetrieben sind.

## Beschreibung

Die Erfindung bezieht sich auf ein stufenlos einstellbares Getriebe mit Antriebs- und Abtriebswelle, sowie einer oder mehreren zugmittelaufnehmenden Scheiben (Getriebescheiben), die im Durchmesser stufenlos veränderbar sind.

Stufenlos einstellbares Getriebe (Variogetriebe), sind Getriebe mit stufenlos veränderlicher Abtriebsdrehzahl, die meist als Zugmittelgetriebe oder Flüssigkeitsgetriebe gestaltet sind. Sie erfüllen die Anforderungen von Fahrzeug- und Maschinenantrieben optimal, weil sie die Anpassung der Drehzahlen an die jeweiligen Betriebsverhältnisse erlauben. Durch stufenlose Änderung des Übersetzungsverhältnisses nehmen diese Getriebe vom Motor die jeweils maximale Drehleistung ab. Auch bei Kleinwagen und Motorrollern werden Keilriemen-Variogetriebe eingesetzt. Dabei kommt es besonders beim Anfahren und Abbremsen zu einer starken Veränderung der Übersetzungsverhältnisse.

Zum Einsatz bei muskelkraftbetriebenen Fahrzeugen sind aus dem Stand der Technik ein Kettenräderwechselgetriebe (DE-PS 663180) und ein Keilriemen-Variogetriebe (DE 196 09 750 C2) bekannt. Beim erwähnten Kettenräderwechselgetriebe ist eine seitliche, lastproportionale Kupplung des Zugmittels und eine Steuerung des Laufkreises über durch Kurvenscheiben geschaltete Kuppelmäntel mit einer Vorund Rückverlagerung des Einkuppelpunktes vorgesehen. Als Zugmittel wird ein nichtelastisches, metallenes Gelenkband verwendet. Die Kuppelmittel sind als radial und axial bewegliche metallene Klemmbacken ausgebildet. Aufgrund des geringen Reibungsbeiwertes zwischen Zugmittel und Gelenkband muss eine hohe Anpresskraft erzeugt werden, um sicher zu kuppeln. Um zu verhindern, dass der Kuppelmechanismus nicht selbsthemmend wird und nicht mehr freikoppelt, sind in den Kurvenscheiben Wälzkörper installiert. Bei dieser Vorrichtung ist nur ein geringer Teil der Zugmittelkraft für die Erzeugung der Kuppelkraft nutzbar, so dass zwangsläufig tangentialer Schlupf zwischen Kuppelmittel und Zugmittel beim Ein- und Auslaufen auftritt.

Beim Keilriemen-Variogetriebe wird die stufenlose Änderung des Getriebe-Übersetzungsverhältnisses ebenfalls durch eine stufenlose Veränderung des Zugmittellaufkreisradius an mindestens einer Triebdoppelscheibe erreicht. Bei radialer Führung des Zugmittels wird auch hier die Kraftübertragung zwischen dem Zugmittel und den Triebdoppelscheiben durch seitlich am Zugmittel angreifende Kuppelmittel erreicht. Die an den Planscheiben angeordneten Kuppelmittel sind tangential und radial beweglich gelagert. Sie sind zur Erreichung der lastabhängigen Kraftübertragung unter Last selbst unterstützend bzw. selbsthemmend ausgeführt und kuppeln am Auslaufpunkt selbsttätig ab. Durch eine aufwendige und wartungsintensive Steuerung setzen die Kuppelmittel die tangentialen und/oder radialen Riemenbewegungen und -kräfte in axiale Spreizbewegungen und damit in seitliche Druckkräfte in Form einer axialen Anpresskraft auf die Riemenflanke um. Die radiale Führung des Zugmittels wird bei diesem Getriebe erreicht durch eine am Steuerarm befestigte Tastrolle, die innenseitig am Zugmittel anliegt und abhängig von der Stellung des Steuerarms dem Zugmittel- Laufkreisradius vorgibt, sowie durch Steuerstifte, die in axialer Richtung verfahrbar sind. Die Steuerstifte führen das Zugmittel bei der Veränderung des Zugmittel-Laufkreisradius, sind jedoch nicht an der durch das Zugmittel vermittelten Kraftübertragung beteiligt. Nachteilig ist, dass diese Steuerung eine Vielzahl von Verschleißteilen beinhaltet. Für einen guten Rundlauf werden beispielsweise 10 Kuppelmittel pro Triebscheibe vorgeschlagen. Neben der Verschleißempfindlichkeit der Kuppelmittel ist außerdem nachteilig, dass diese mit beträchtlichem Zeitaufwand eingestellt werden müssen.

Der Erfindung liegt das Problem der Konstruktion von stufenlos einstellbaren Getrieben für verschiedene Einsatzbereiche zugrunde, deren Getriebescheiben im Durchmesser stufenlos veränderbar sind, so dass eine stufenlose Änderung des Getriebe-Übersetzungsverhältnisses möglich ist. Dabei soll ganz auf seitliche mit Klemmkraft am Zugmittel angreifende Kuppelmittel verzichtet werden.

Erfindungsgemäß wird die Aufgabe ausgehend von einem gattungsgemäßen Variogetriebe (DE 196 09 750 C2), mit seitlich am Zugmittel angreifenden Kuppelmitteln, dadurch gelöst, dass die Getriebescheiben segmentartig aufgebaut sind und eine mittige Bohrung aufweisen, an die ein in axialer Richtung beweglich gelagertes Steuerelement mit konischer Außenform anliegt, die Segmente in radialer Richtung stufenlos beweglich sind, der übersetzungswirksame Durchmesser jeder Getriebescheibe durch die Verschiebung des Steuerelementes in axialer Richtung unter Aufweitung der mittigen Bohrung zwischen den Segmenten regulierbar ist, wobei die Segmente in axialer Richtung beidseitig geführt und angetrieben sind.

Der Kerngedanke der Erfindung besteht darin, dass der Zugmittel-Laufkreisradius einer segmentartig aufgebauten Getriebescheibe durch ein in axialer Richtung beweglich gelagertes Steuerelement mit konischer Außenform stufenlos einstellbar ist, wobei es bei höheren Drehzahlen zu einer Aufweitung der Segmente und damit des Scheibendurchmessers kommt. Verursacht wird diese Aufweitung durch das mit Federdruck anliegende Steuersegment. Die Segmente jeder Getriebescheibe sind unterhalb des zur Aufnahme des Zugmittel dienenden äußeren Bereichs in axialer Richtung beidseitig geführt, durch zwei Führringe, die mit der Antriebswelle starr verbunden sind. Die Segmente der Getriebescheibe, das Steuerelement und die mit der Achse starr verbundenen beidseitig anliegenden Führringe bilden so zusammen, bei entsprechender Lagerung, eine frei drehbare Einheit.

In der normalen Ausführungsform der erfindungsgemäßen Getriebescheibe ist die Form der Segmente so gestaltet, dass sie bei ihrer Bewegung in radialer Richtung an ihrer Schmalseite durch Rollen geführt werden, die auf einem konzentrischen Kreis zwischen den Segmenten positioniert sind. Jedes Segment ist mit einem in radialer Richtung ausgerichteten Langloch versehen, durch das ein in den seitlich anliegenden Führungsringen verankerter Sicherungsstift führt. Während der minimale Zugmittel-Laufkreisradius der Getriebescheibe durch die Entfernung des Steuerelementes aus der mittigen Bohrung einstellbar ist, begrenzt der genannte Sicherungsstift die maximale Aufweitung der einzelnen Segmente beim Verschieben des Steuerelementes in axialer Richtung. Die aufgeweiteten Segmente liegen dabei auf der konischen Außenseite des Steuerelementes auf. Da das Steuerelement mit konstantem Anpressdruck, der durch eine in der hohlzylindrischen Antriebswelle befestigten Schraubendruckfeder geschaffen wird, seitlich am unteren Ende der Segmente anliegt, kommt es bei zunehmenden Drehzahlen zu einer Aufweitung der Getriebescheibe. Verbunden damit ist eine stufenlose Änderung des Getriebe-Übersetzungsverhältnisses.

Die einfachste Ausführungsform eines Getriebes unter Verwendung der erfindungsgemäßen Getriebescheibe erhält man, in dem man die Getriebescheibe mit einer im Durchmesser konstanten und auf einer parallel verlaufenden Abtriebswelle befestigten Abtriebsscheibe durch Zugmittel verbindet. Die entsprechende Abtriebswelle könnte beispielsweise die Nabe am Hinterrad eines Fahrrades sein. Um zu vermeiden, dass das Zugmittel bei abnehmendem Durchmesser der Antriebsscheibe durchhängt, wird das Zugmittel von einer zusätzlich angebrachten Spannrolle mit leichter Spannung geführt.

Die segmentartig aufgebaute Getriebescheibe lässt sich bei entsprechender Anbringung auf Antriebs- und Abtriebswellen zum modulartigen Aufbau von gekoppelten Getrieben nutzen. Ein erfindungsgemäßes einfach-gekoppeltes und ein erfindungsgemäßes zweifach-gekoppeltes stufenlos schaltbares Getriebe werden im folgenden besprochen.

### Einfach-gekoppeltes stufenlos einstellbares Getriebes:

In einer einfachen Ausführungsform erhält man unter Nutzung zweier Getriebescheiben, die auf zueinander paralleler Antriebs- und Abtriebswelle zugmittelverbunden befestigt sind, ein einfach-gekoppeltes stufenlos einstellbares Getriebe. Dabei ist sowohl die mit der Antriebswelle in Verbindung stehende Getriebescheibe (Antriebsscheibe), als auch die mit der Abtriebswelle in Verbindung stehende Getriebescheibe (Abtriebsscheibe) mit einem Steuerelement versehen. Entscheidend für die Steuerung des Getriebes ist, dass das Steuerelement auf der Antriebswelle mit dem Steuerelement auf der Abtriebswelle durch einen zwischen den Achsen drehbar fixierten Hebel mechanisch miteinander gekoppelt sind. Im Hinblick auf den Außendurchmesser der Getriebescheiben kann aufgrund der Koppelung von einer inversen Steuerung der beiden Getriebescheiben gesprochen werden: Während die Segmente der Antriebsscheibe bei höheren Drehzahlen durch das Steuerelement zu größerem Durchmesser aufgeweitet werden, wird das Steuerelement der Abtriebsscheibe von deren Segmenten wegbewegt, so dass sich diese nach innen bewegen und die Abtriebsscheibe einen geringeren Außendurchmesser aufweist. Durch das Verschieben des drehbar fixierten Hebels kann die Regulation des einfach-gekoppelten stufenlos einstellbaren Getriebes von außen zusätzlich beeinflusst werden.

Zur Installation des einfach-gekoppelten stufenlos einstellbaren Getriebes an einer Maschine oder an einem Fahrrad wird das Getriebe in einem Gehäuse installiert, das zugleich das Getriebegestell bildet. Zur Übertragung der Kraft an das Hinterrad des Fahrrades oder eine andere nicht zum Getriebe gehörende Scheibe wird außerhalb des Gehäuses eine zusätzliche Scheibe befestigt, die einen konstantem Durchmesser aufweist und mit der Abtriebswelle des Getriebes verbunden ist.

### Zweifach-gekoppeltes stufenlos einstellbares Getriebe:

In einer besonderen Ausführungsform des stufenlos einstellbaren Getriebes, nämlich in Form eines zweifach-gekoppelten Getriebes, kommt die Eignung der erfindungsgemäßen Getriebescheibe zum modulartigen Aufbau von stufenlos einstellbaren Getriebe deutlich zum Ausdruck. Beim zweifach-gekoppelten stufenlos einstellbaren Getriebe werden auf zwei konstant voneinander beabstandeten und parallel angeordneten Wellen zwei sich jeweils paarweise direkt gegenüberliegende Getriebescheiben durch Zugmittel bewegungsmäßig gekoppelt. Die erste mit der Antriebswelle verbundene Getriebescheibe wird als Antriebsscheibe bezeichnet und entspricht im Aufbau der erfindungsgemäßen Getriebescheibe. Auf der parallel verlaufenden Übersetzungswelle ist eine weitere Getriebescheibe befestigt. Diese beiden Scheiben werden als Übersetzungsscheiben bezeichnet und entsprechen im Aufbau ebenfalls der erfindungsgemäßen Getriebescheibe. Die Übersetzungsscheiben sind mit der Übersetzungswelle starr verbunden. Die Steuerelemente der Übersetzungsscheiben haben ebenfalls eine konische Außenform und weisen auf ihrer aufgeweiteten Seite eine mittige Bohrung auf und sind jeweils auf dieser aufgeweiteten Seite durch einen Hohlzylinder starr miteinander verbunden. Diese durch den Hohlzylinder geschaffene Einheit ist beweglich auf der Übersetzungswelle gelagert und wird als Steuereinheit der Übersetzungswelle bezeichnet. Aufgrund der konstanten Beabstandung der Steuerelemente auf der Übersetzungswelle sind die Übersetzungsscheiben in der Einstellung ihrer übersetzungswirksamen Durchmesser voneinander abhängig.

Die zweifache Koppelung des Getriebes kommt nun dadurch zustande, dass das beweglich gelagerte Steuerelement der Antriebsscheibe und die beweglich mit der Übersetzungsachse verbundene Steuereinheit durch einen zwischen den Achsen drehbar fixierten Hebel miteinander gekoppelt sind. Kommt es also bei höheren Drehzahlen zu einer Aufweitung der Antriebsscheibe, so wird die axiale Bewegung des Steuerelementes der Antriebsscheibe in Richtung der Segmente der Antriebsscheibe durch den zwischen den Achsen befestigten Hebel auf die Steuereinheit der Übersetzungswelle übertragen. Aufgrund der bewegungsmäßigen Koppelung der Steuerelemente ist die Aufweitung der Antriebsscheibe verbunden mit einer Verringerung des Durchmessers auf der gegenüberliegenden Übersetzungsscheibe, die mit der Antriebsscheibe durch Zugmittel verbunden ist. Bedingt durch die starre Verbindung der beiden Steuerelemente auf der Übersetzungswelle hat die Bewegung der Steuereinheit auch Auswirkung auf den Durchmesser der zweiten Übersetzungsscheibe: Wird der Durchmesser der mit der Antriebsscheibe verbundenen Übersetzungsscheibe zu kleineren Durchmessern reguliert, so wird zwangsweise der Durchmesser der zweiten Übersetzungsscheibe vergrößert. Da beide Übersetzungsscheiben auf der Übersetzungswelle starr miteinander verbunden sind, haben sie die gleiche Drehzahl, aber stark unterschiedliche Außendurchmesser. Die Koppelung ist derart, dass bei maximalem Außendurchmesser der Antriebsscheibe auch die zweite Übersetzungsscheibe ihren maximalen Außendurchmesser erreicht und somit auf die im Durchmesser konstante und frei auf der Antriebswelle gelagerte Abtriebsscheibe durch Zugmittelverbindung die maximale Drehzahlen erzeugt. Zur Spannung des Zugmittels bei abnehmendem Durchmesser der zweiten Übersetzungsscheibe liegt eine Spannrolle mit leichter Spannung am Zugmittel an.

Diese in ihrem Zusammenwirken beschriebenen wesentlichen Bestandteile des zweifach-gekoppelten stufenlos einstellbaren Getriebes werden in der beschriebenen Anordnung durch ein Gehäuse umgeben, das zugleich das Getriebegestell darstellt. Zur Kraftübertragung auf einen nicht zum Getriebe gehörenden Antrieb ist die auf der Antriebswelle frei gelagerte und im Durchmesser konstante Getriebescheibe außerhalb des Gehäuses mit einer weiteren, im Durchmesser ebenfalls konstanten Scheibe starr verbunden.

Die zur Herstellung der Wirkverbindung zwischen den Getriebescheiben bzw. zwischen den Getriebe- und Abtriebsscheiben eingesetzten Zugmittel sind vorzugsweise Keil- oder Flachriemen. Für die Kraftübertragung ausgehend von den außerhalb des Getriebegehäuses liegenden, im Durchmesser konstanten Scheiben, eignen sich als Zugmittel Keilriemen, Flachriemen, Zahnriemen, Zahnketten oder Rollketten.

### Fahrradgetriebe:

Die erfindungsgemäße Getriebescheibe und die darauf aufbauenden Getriebeformen eignet sich auch zum Antrieb von Fahrrädern. Die einfachste Form eines entsprechenden Fahrradgetriebes ist dadurch gekennzeichnet, dass eine erfindungsgemäße Getriebescheibe als Antriebsscheibe mit den Pedalen in Verbindung steht und durch Zugmittel mit einer auf der Nabe des Hinterrades befestigten und im Durchmesser konstanten Scheibe verbunden ist. Um das Zugmittel bei kleineren Durchmessern der Antriebsscheibe unter Spannung zu halten, liegt am Zugmittel eine Spannrolle mit leichter Spannung an.

Ein einfach-gekoppeltes stufenlos einstellbares Fahrradgetriebe kann mit der erfindungsgemäßen Getriebescheibe auf zwei verschiedene Arten konstruiert werden. Im ersten Fall wird eine erfindungsgemäße Getriebescheibe als Antriebsscheibe mit den Pedalen des Zwei-Rades verbunden. Eine zweite baugleiche Getriebescheibe wird über ihre Welle starr mit der Nabe des Hinterrades verbunden. Weil der Rahmen des Fahrrades hinderlich wäre, sind die Steuerelemente der beiden Getriebescheiben in diesem Fall nicht durch einen Hebel, sondern durch Schaltzüge wirkverbunden.

Die zweite Möglichkeit zur Installation eines einfach-gekoppelten stufenlos einstellbaren Getriebes am Fahrrad besteht in der Verwendung des beschriebenen erfindungsgemäßen einfach-gekoppelten stufenlos einstellbaren Getriebes. Dabei werden die Pedale an der Antriebswelle des Getriebes befestigt und die außerhalb des Getriebegehäuses liegende Scheibe wird durch Zugmittel mit der Nabe des Hinterrades verbunden. Ein Fahrrad mit zweifach-gekoppelter stufenloser Schaltung erhält man durch den entsprechenden Einbau des erfindungsgemäßen zweifach-gekoppelten stufenlos einstellbaren Getriebes.

Weitere Einzelheiten und Merkmale der Erfindung lassen sich dem nachfolgenden Beschreibungsteil entnehmen. Darin werden mögliche Ausführungsbeispiele der auf die erfindungsgemäße Getriebescheibe aufbauenden Getriebeformen anhand von Zeichnungen näher erläutert.

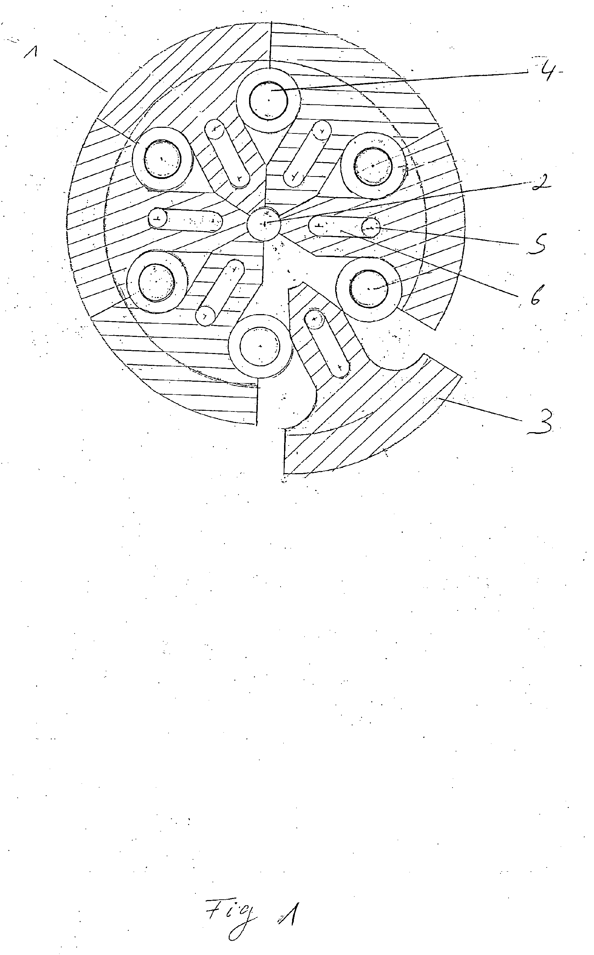

In Figur 1 ist eine aus sechs Segmenten 3 aufgebaute Getriebescheibe 1 abgebildet. Die Form der Segmente 3 ist so gestaltet, dass sie bei ihrer Bewegung in radialer Richtung an ihrer Schmalseite durch Rollen 4 geführt werden, die auf einem konzentrischen Kreis zwischen den Segmenten 3 positioniert sind. Jedes Segment 3 ist mit einem in radialer Richtung ausgerichteten Langloch 6 versehen, durch das ein in den seitlich anliegenden Führungsringen 8a, 8b verankerter Sicherungsstift 5 führt. Der Sicherungsstift 5 begrenzt die Aufweitung der Segmente 3 in radialer Richtung, wenn das in axialer Richtung bewegliche Steuerelement 7a die Segmente 3 an der mittigen Bohrung 2 aufweitet.

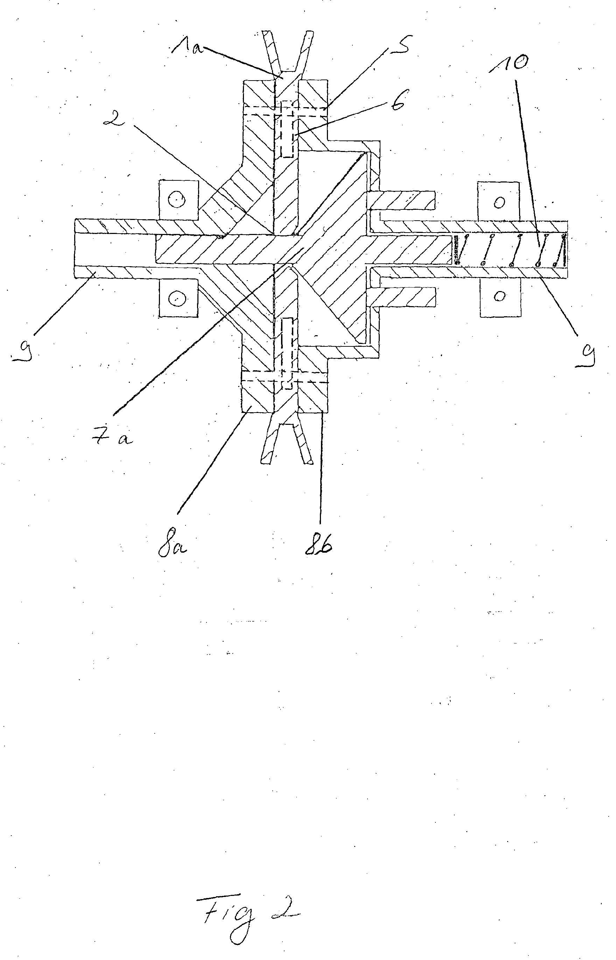

In Figur 2 ist eine erfindungsgemäße Getriebescheibe 1a im Querschnitt mit dem kleinstmöglichen Scheibendurchmesser zu sehen. Die Segmente der Getriebescheibe 1a sind unterhalb des zur Aufnahme des Zugmittels 12 dienenden Bereichs in axialer Richtung beidseitig geführt, durch zwei Führringe 8a, die mit der Antriebswelle 9 starr verbunden sind. In der Antriebswelle 9 ist ein Steuerelement 7a mit konischer Außenform so gelagert, dass das verjüngte Ende an der mittigen Bohrung 2 der Getriebescheibe 1a anliegt. Das Steuerelement 7a wird durch eine Schraubendruckfeder 10 mit konstantem Anpressdruck gegen die Segmente 3 der Getriebescheibe 1a gepresst. Die beschriebenen Bestandteile: die Segmente der Getriebescheibe 1a, das Steuerelement 7a und die mit der Achse 9 starr verbundenen beidseitig anliegenden Führringe 8a und 8b bilden zusammen eine Einheit, die bei entsprechender Lagerung frei drehbar ist.

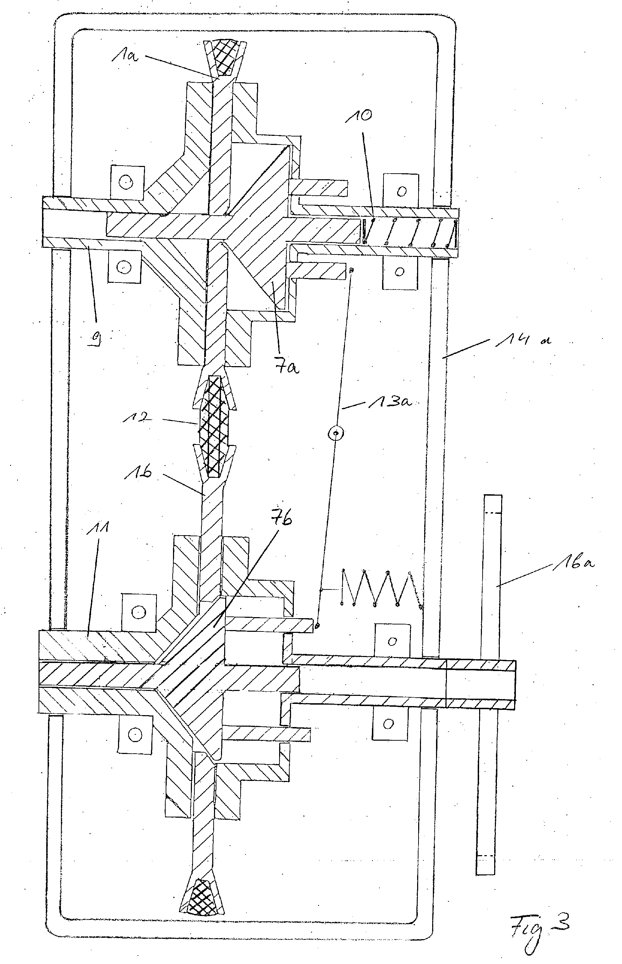

In Figur 3 ist ein einfach-gekoppeltes stufenlos einstellbares Getriebe im Querschnitt gezeigt. Dabei ist eine erfindungsgemäße Getriebescheibe 1 a mit der Antriebswelle 9 verbunden. Parallel dazu ist eine zweite erfindungsgemäße Getriebescheibe 1 b auf der Abtriebswelle 11 befestigt. Die beiden Getriebescheiben sind durch ein Zugmittel 12 wirkverbunden. Die Segmente der zweiten Getriebescheibe 1b sind durch das konische Steuerelement 7b zum maximal möglichen Durchmesser aufgeweitet, während die Getriebescheibe 1a ihren kleinstmöglichen Durchmesser zeigt. Die Bewegungen der Steuerelemente 7a und 7b sind durch einen Hebel 13a miteinander gekoppelt. Wenn es durch höhere Antriebsdrehzahlen an der Antriebswelle 9 zu einer Aufweitung der Getriebescheibe 1a kommt, so wird gleichzeitig das Steuerelement 7b zurückgefahren, wobei der Durchmesser der Getriebescheibe 1b abnimmt. Aufgrund dieser, durch den Hebel 13a vermittelten Kopplung kommt es zu einer stufenlosen Änderung des Getriebe-Übersetzungsverhältnisses. Außerhalb des Getriebegehäuses 14a ist zur weiteren Kraftübertragung eine im Durchmesser konstante Scheibe 16a starr mit der Abtriebswelle verbunden.

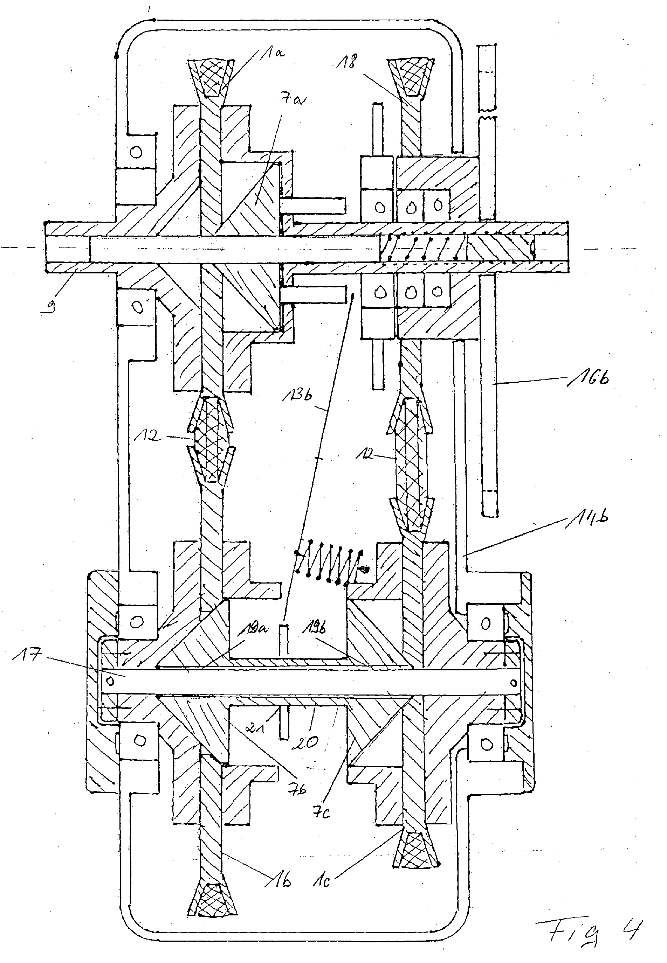

In Figur 4 ist der Querschnitt durch ein zweifach-gekoppeltes stufenlos einstellbares Getriebes gezeigt. Am Aufbau dieses Getriebes sind drei erfindungsgemäße Getriebescheiben 1a, 1b bund 1c beteiligt. Die erste mit der Antriebswelle 9 verbundene Getriebescheibe 1a wird als Antriebsscheibe bezeichnet. Die beiden auf der parallel verlaufenden Übersetzungswelle befestigten Getriebescheiben 1b und 1c werden als Übersetzungsscheiben bezeichnet. Die Übersetzungsscheiben 1b, 1c sind mit der Übersetzungswelle 17 starr verbunden. Die Steuerelemente 7b, 7c weisen auf ihrer aufgeweiteten Seite eine mittige Bohrung 19a, 19b auf und sind an dieser Stelle durch einen Hohlzylinder 20 starr miteinander verbunden. Diese Einheit ist beweglich auf der Übersetzungswelle gelagert und wird als Steuereinheit 21 der Übersetzungswelle bezeichnet. Die zweifache Koppelung des Getriebes kommt dadurch zustande, dass das beweglich gelagerte Steuerelement 7a der Antriebsscheibe 1a und die beweglich mit der Übersetzungsachse 17 verbundene Steuereinheit 21 durch einen zwischen den Achsen drehbar fixierten Hebel 13b miteinander gekoppelt sind. Die zweite Übersetzungsscheibe 1c ist durch Zugmittel 12 mit einer auf der Antriebswelle 9 frei gelagerten und im Durchmesser konstanten Abtriebsscheibe 18 verbunden. Zur weiteren Kraftübertragung ist die Scheibe 18 außerhalb des Gehäuses 14b, das zugleich das Getriebegestell darstellt, mit einer weiteren im Durchmesser ebenfalls konstanten Scheibe 16b starr verbunden.

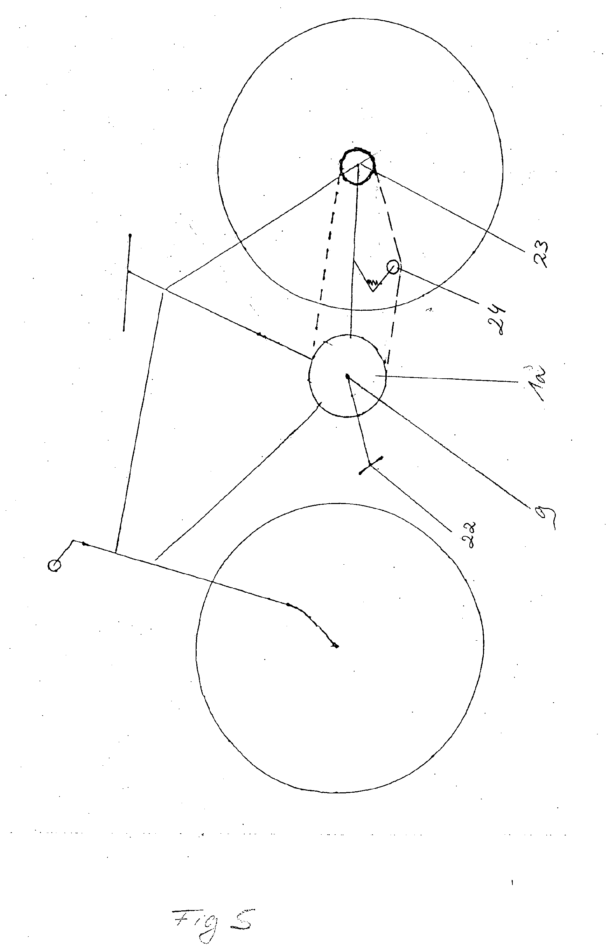

In Figur 5 ist die einfachste mit der erfindungsgemäßen Getriebescheibe zu erreichende Form eines stufenlos einstellbaren Fahrradgetriebes schematisch gezeigt. Die Pedale 22 des Fahrrads sind dabei mit der Achse 9 der Getriebescheibe 1a starr verbunden. Die im Durchmesser variable Getriebescheibe 1a ist durch Zugmittel mit einer an der Nabe des Hinterrades 23 befestigten Scheibe verbunden. Zur Spannung des Zugmittels bei abnehmendem Durchmesser der Getriebescheibe 1a liegt am Zugmittel eine Spannrolle 24 mit leichter Spannung an.

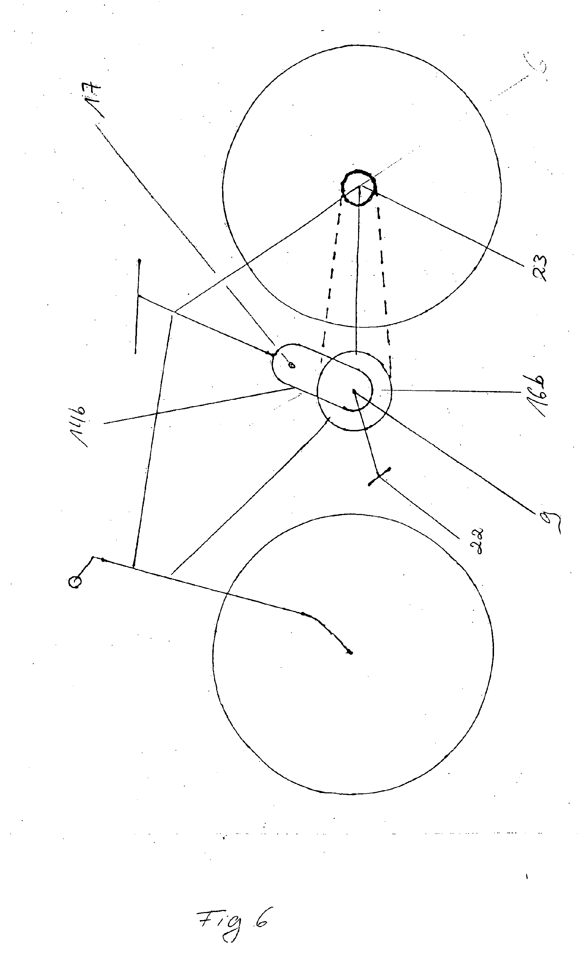

In Figur 6 ist die Verwendung des zweifach-gekoppelten stufenlos einstellbaren Getriebes als Fahrradgetriebe schematisch gezeigt. Die Antriebswelle 9 ist dabei starr mit den Pedalen 22 verbunden. Das Getriebegehäuse 14b ist beim Einbau in das Fahrrad so orientiert, dass die Längsseite der Übersetzungswelle 17 in Richtung Fahrradsattel zeigt. Die zur Kraftübertragung außerhalb des Getriebegehäuses 14b liegende Scheibe 16b, die im Durchmesser konstant ist, ist durch Zugmittel mit einer an der Nabe 23 befestigten und im Durchmesser ebenfalls konstanten Scheibe verbunden.

## Patentansprüche

1. Stufenlos einstellbares Getriebe mit Antriebs- und Abtriebswelle, sowie einer oder mehreren zugmittelaufnehmenden Scheiben (Getriebescheiben), die im Durchmesser stufenlos veränderbar sind, **dadurch gekennzeichnet, dass**
- die Getriebescheiben (1) segmentartig aufgebaut sind und eine mittige Bohrung (2) aufweisen, an die ein in axialer Richtung beweglich gelagertes Steuerelement (7) mit konischer Außenform anliegt,
- die Segmente (3) in radialer Richtung stufenlos beweglich sind,
- der übersetzungswirksame Durchmesser jeder Getriebescheibe (1) durch die Verschiebung eines Steuerelementes (7a) in axialer Richtung unter Aufweitung der mittigen Bohrung (2) zwischen den Segmenten (3) regulierbar ist,
- die Segmente (3) in axialer Richtung beidseitig geführt und angetrieben sind.

2. Getriebe nach Anspruch 1, **dadurch gekennzeichnet, dass** die Segmente in axialer Richtung beidseitig geführt sind zwischen zwei Führungsringen (8a/8b), die mit der Welle (9) starr verbunden sind.

3. Getriebe nach Anspruch 1 und 2, **dadurch gekennzeichnet, dass**
- die Form der Segmente (3) so gestaltet ist, dass sie bei ihrer Bewegung in radialer Richtung an ihrer Schmalseite durch zwischen den Segmenten auf einem konzentrischen Kreis positionierten Rollen (4) führbar sind, und
- ein Sicherungsstift (5), der beidseitig in den Führungsringen (8a/8b) verankert ist, durch ein in jedem Segment (3) in radialer Richtung ausgerichtetes Langloch (6) führt.

4. Getriebe nach Anspruch 1, 2 und 3, **dadurch gekennzeichnet, dass** das beweglich gelagerte Steuerelement (7) mit konstantem Anpressdruck in axialer Richtung an den Segmenten (3) der Getriebescheibe (1) anliegt, die auf der Antriebswelle (9) befestigt ist.

5. Getriebe nach Anspruch 4, **dadurch gekennzeichnet, dass** der Anpressdruck durch eine Schraubendruckfeder (10) geschaffen wird, die in der hohlzylindrischen Antriebswelle (9) fixiert ist.

6. Stufenlos einstellbares Getriebe mit einer Getriebescheibe nach Anspruch 1 bis 5, **dadurch gekennzeichnet, dass**
- eine mit der Antriebswelle (9) verbundene erfindungsgemäße Getriebescheibe (1) mit einer im Durchmesser konstanten und auf einer parallel verlaufenden Abtriebswelle befestigten Abtriebsscheibe durch Zugmittel wirkverbunden ist, wobei
- bei höheren Drehzahlen die Segmente (3) der Getriebescheibe durch das Steuerelement (7a) zu größerem Durchmesser aufgeweitet sind, und
- am Zugmittel innenseitig eine Spannrolle anliegt.

7. Einfach-gekoppeltes stufenlos einstellbares Getriebe mit zwei Getriebescheiben (1a-1b) nach Anspruch 1 bis 5, **dadurch gekennzeichnet, dass** die mit der Antriebswelle (9) in Verbindung stehende Getriebescheibe (Antriebsscheibe) (1a) mit Steuerelement (7) und eine mit der parallel angeordneten Abtriebswelle (11) in Verbindung stehende Getriebescheibe (Abtriebsscheibe) (1b) mit Steuerelement (7), durch Zugmittel (12) wirkverbunden sind.

8. Einfach-gekoppeltes stufenlos einstellbares Getriebe nach Anspruch 7, **dadurch gekennzeichnet, dass**
- die Bewegungen der Steuerelemente auf der Antriebswelle (9) und auf der Abtriebswelle (11) durch einen zwischen den Achsen drehbar fixierten Hebel (13) miteinander gekoppelt sind,
- bei höheren Drehzahlen die Segmente (3) der Antriebsscheibe (1a) durch das Steuerelement (7a) zu größerem Durchmesser aufgeweitet sind und die Segmente der Abtriebsscheibe (1b) einen in gleichem Maße geringeren Durchmesser aufweisen, und
- durch Verschieben des drehbar fixierten Hebels (13a) das Übersetzungsverhältnis zwischen Antriebs- (9) und Abtriebswelle (11) veränderbar ist.

9. Einfach-gekoppeltes stufenlos einstellbares Getriebe nach Anspruch 7 und 8, **dadurch gekennzeichnet, dass** die beschriebene Anordnung umgeben ist durch ein Gehäuse (14a), welches das Getriebegestell darstellt.

10. Einfach-gekoppeltes stufenlos einstellbares Getriebe nach Anspruch 7 bis 9, **dadurch gekennzeichnet, dass** auf der Abtriebswelle (11) außerhalb des Gehäuses (14) eine zusätzliche Scheibe (16b) mit konstantem Durchmesser zur weiteren Kraftübertragung befestigt ist.

11. Zweifach-gekoppeltes stufenlos einstellbares Getriebe nach Anspruch 1 bis 5 bestehend aus zwei konstant voneinander beabstandeten und parallel angeordneten Wellen mit jeweils zwei sich paarweise direkt gegenüberliegenden Getriebescheiben, die durch Zugmittel (12) bewegungsmäßig gekoppelt sind, **dadurch gekennzeichnet, dass**
- die mit der Antriebswelle (9) verbundene Getriebescheibe (Antriebsscheibe) (1a) den durch Anspruch 1 bis 5 offenbarten Aufbau aufweist und durch ein konisches Steuerelement (7) im Durchmesser steuerbar sind.
- beide mit der parallel verlaufenden Übersetzungswelle (17) verbundenen Getriebescheiben (Übersetzungsscheiben) (1b/1c) den in Anspruch 1 bis 3 offenbarten Aufbau aufweisen und jeweils beide durch ein konisches Steuerelement (7b/7c) in ihrem Durchmesser, steuerbar sind.
- die verbleibende vierte zum Getriebe gehörende Scheibe (18) eine auf der Antriebswelle (9) freigelagert und im Durchmesser konstante Scheibe ist, und
- an dem Zugmittel, das die zweite Übersetzungsscheibe (1c) mit der im Durchmesser konstanten Scheibe (18) verbindet, eine Spannrolle anliegt.

12. Zweifach-gekoppeltes stufenlos einstellbares Getriebe nach Anspruch 11, **dadurch gekennzeichnet, dass**
- die beiden Steuerelemente (7b/7c) der auf der Übersetzungswelle fixierten Getriebescheiben eine mittige Bohrung (19a/19b) aufweisen und auf ihrer aufgeweiteten Seite durch einen Hohlzylinder (20) starr miteinander verbunden sind, und derart als Steuereinheit (21) beweglich auf der Übersetzungsachse (17) gelagert sind, wobei
- die übersetzungswirksamen Durchmessung der Übersetzungsscheiben (1b/1c) aufgrund der konstanten Beabstandung der als Einheit zusammengefassten Steuerelemente voneinander abhängig einstellbar sind.

13. Zweifach-gekoppeltes stufenlos einstellbares Getriebe nach Anspruch 11 und 12, **dadurch gekennzeichnet, dass** das beweglich gelagerte Steuerelement (7a) der Antriebsscheibe (1a) und die beweglich mit der Übersetzungsachse (17) verbundene Steuereinheit (21) durch einen zwischen den Achsen drehbar fixierten Hebel (13b) miteinander gekoppelt sind.

14. Zweifach-gekoppeltes stufenlos einstellbares Getriebe nach Anspruch 11 bis 13, **dadurch gekennzeichnet, dass** die beschriebene Anordnung umgeben ist durch ein Gehäuse (14b), welches das Getriebegestell darstellt.

15. Zweifach-gekoppeltes stufenlos einstellbares Getriebe nach Anspruch 11 bis 14, **dadurch gekennzeichnet, dass** die auf der Antriebswelle frei gelagerte, im Durchmesser konstante Scheibe (18) sich außerhalb des Gehäuses (14b) fortsetzt und außenseitig mit einer zusätzlichen Scheibe (16b) zur weiteren Kraftübertragung starr verbunden ist.

16. Stufenlos einstellbare Getriebe nach Anspruch 6 bis 15, **dadurch gekennzeichnet, dass** die zur Herstellung der Wirkverbindung zwischen den Getriebescheiben (1a und 1b) bzw. zwischen den Getriebe- (1a und 1c) und Abtriebsscheiben (1b und 18) eingesetzten Zugmittel (12) vorzugsweise Keil- oder Flachriemen sind.

17. Stufenlos einstellbare Getriebe nach Anspruch 10 und 15, **dadurch gekennzeichnet, dass** die auf den außerhalb des Getriebegehäuses (14b) liegenden, im Durchmesser konstanten Scheiben (16a und 16b) befestigten Zugmittel (12) Keilriemen, Flachriemen, Zahnriemen, Zahnketten oder Rollketten sind.

18. Stufenlos einstellbares Fahrradgetriebe nach Anspruch 6, **dadurch gekennzeichnet, dass**
- eine erfindungsgemäße Getriebescheibe (1) als Antriebsscheibe mit den Pedalen (22) eines Zwei-Rades in Verbindung steht und durch Zugmittel (12) mit einer auf der Nabe des Hinterrades des Zwei-Rades befestigten im Durchmesser konstanten Scheibe (23) wirkverbunden ist, wobei
- am Zugmittel (12) eine Spannrolle (24) mit leichter Spannung anliegt.

19. Einfach-gekoppeltes stufenlos einstellbares Fahrradgetriebe nach Anspruch 1 bis 5 und 7 bis 10, **dadurch gekennzeichnet, dass**
- eine erfindungsgemäße Getriebescheibe (1a) als Antriebsscheibe mit den Pedalen (22) eines Zwei-Rades in Verbindung steht,
- die Welle einer zweiten erfindungsgemäßen Getriebescheibe (1b) als Abtriebsscheibe starr mit der Nabe (23) des Hinterrades des Zwei-Rades verbunden ist, und
- die Steuerelemente (7a/7b) der beiden Getriebe-Scheiben (1a und 1b) durch Schaltzüge in Wirkverbindung stehen.

20. Einfach-gekoppeltes stufenlos einstellbares Fahrradgetriebe nach Anspruch 1 bis 5 und 7 bis 10, **dadurch gekennzeichnet, dass** die Antriebswelle des erfindungsgemäßen einfachgekoppelt stufenlos einstellbaren Getriebes verbunden ist mit den Pedalen (22) eines Zwei-Rades und die Antriebsscheibe (16a und 16b) außerhalb des Gehäuses (14a) durch Zugmittel (12) mit der Nabe (23) des Hinterrades des Zwei-Rades in Wirkverbindung steht.

21. Zweifach-gekoppeltes stufenlos einstellbares Fahrradgetriebe nach Anspruch 1 bis 5 und 11 bis 15, **dadurch gekennzeichnet, dass** die Antriebswelle (9) des erfindungsgemäßen zweifach-gekoppelten stufenlos einstellbaren Getriebes verbunden ist mit den Pedalen (22) eines Zwei-Rades und die Antriebsscheibe (16a und 16b) außerhalb des Gehäuses (14a) durch Zugmittel (12) mit der Nabe (23) des Hinterrades des Zwei-Rades in Wirkverbindung steht.
